# EUROPÄISCHE PATENTANMELDUNG

(11) **EP 3 771 874 A1**
(43) Veröffentlichungstag der Anmeldung: **03.02.2021**
(21) Anmeldenummer: 20184133.5
(22) Anmeldetag: 06.07.2020
(51) Int. Cl.: F26B 17/04, B01D 53/26, F26B 21/04, F26B 21/08, F26B 25/00

(54) **SPRÜHKONDENSATOR, TROCKNUNGSANLAGE SOWIE VERFAHREN ZUM TROCKNEN VON FEUCHTEM GUT**

(30) Priorität: 30.07.2019 DE 102019120583
(71) Anmelder: Huber SE, 92334 Berching (DE)
(72) Erfinder: Heindl, Albert, 92364 Deining (DE); Ostermann, Stefan, 92353 Postbauer-Heng (DE); Dürr, Josef, 92334 Berching (DE); Meier, Martin, 92360 Mühlhausen/Wangen (DE)
(74) Vertreter: Baudler, Ron

(57) **Zusammenfassung**

Die Erfindung betrifft Sprühkondensator (1) zum Entfeuchten von feuchter, schwefelwasserstoffhaltiger, Luft wobei der Sprühkondensator (1) einen Lufteinlass (2) für die feuchte Luft, einen mit dem Lufteinlass (2) strömungstechnisch in Verbindung stehenden Behandlungsraum (3) zum Entfeuchten der feuchten Luft sowie einen Luftauslass (4) für die im Behandlungsraum (3) entfeuchtete Luft aufweist, wobei der Sprühkondensator (1) Sprühdüsen (5) aufweist, über die gekühlte Flüssigkeit (6) in den Behandlungsraum (3) eindüsbar ist, um in der feuchten Luft vorhandenen Wasserdampf abzukühlen und hierdurch zu kondensieren. Erfindungsgemäß wird vorgeschlagen, dass der Sprühkondensator (1) eine Austragsanordnung aufweist, mit deren Hilfe elementarer Schwefel, der sich beim Betrieb des Sprühkondensators (1) innerhalb des Behandlungsraums (3) durch Oxidation des von der feuchten Luft mitgeführten Schwefelwasserstoffs bildet, aus dem Sprühkondensator (1) austragbar ist. Ferner wird eine Trocknungsanlage sowie ein Verfahren zum Trocknen von feuchtem Gut vorgeschlagen.

## Beschreibung

Die vorliegende Erfindung betrifft einen Sprühkondensator zum Entfeuchten von feuchter, schwefelwasserstoffhaltiger Luft, wobei der Sprühkondensator einen Lufteinlass für die feuchte Luft, einen mit dem Lufteinlass strömungstechnisch in Verbindung stehenden und insbesondere zur Umgebung abgeschlossenen Behandlungsraum zum Entfeuchten der feuchten Luft sowie einen Luftauslass für die im Behandlungsraum entfeuchtete Luft aufweist. Der Sprühkondensator weist ferner Sprühdüsen auf, über die gekühlte Flüssigkeit in den Behandlungsraum eindüsbar ist, um in der feuchten Luft vorhandenen Wasserdampf abzukühlen und hierdurch zu kondensieren.

Bei der gekühlten Flüssigkeit handelt es sich vorzugsweise um Wasser, welches mit Hilfe eines Wärmetauschers oder einer sonstigen Kühlvorrichtung auf eine Temperatur von weniger als 40°C abgekühlt wurde, bevor es über die Sprühdüsen in den Behandlungsraum eingebracht wird. Durch den Kontakt zwischen der gekühlten Flüssigkeit und dem in der Luft vorhandenen Wasserdampf kommt es zu einer Abkühlung und damit einer Kondensation des Wasserdampfs. Im Ergebnis wird hierdurch die Luft entfeuchtet.

Ferner wird eine Trocknungsanlage zum Trocknen eines schwefelwasserstoffhaltigen feuchten Guts, insbesondere Klärschlamm, vorgeschlagen, wobei die Trocknungsanlage einen Trocknungsraum mit einem Einlass für das feuchte Gut und einem Auslass für das in dem Trocknungsraum getrocknete Gut umfasst, und wobei die Trocknungsanlage einen Kondensator umfasst, der derart mit dem Trocknungsraum in Verbindung steht, dass beim Betrieb der Trocknungsanlage im Trocknungsraum entstehende feuchte, schwefelwasserstoffhaltige Luft aus dem Trocknungsraum abführbar und dem Kondensator zur Entfeuchtung zuführbar ist.

Schließlich betrifft die Erfindung ein Verfahren zum Trocknen von feuchtem Gut, insbesondere Klärschlamm, mit Hilfe einer Trocknungsanlage, vorzugsweise mit einer Trocknungsanlage gemäß nachfolgender Beschreibung, wobei das feuchte Gut über einen Einlass in einen Trocknungsraum der Trocknungsanlage eingebracht und nach dem Trocknungsvorgang über einen Auslass aus dem Trocknungsraum abgeführt wird, und wobei die beim Betrieb der Trocknungsanlage im Trocknungsraum entstehende feuchte, schwefelwasserstoffhaltige Luft aus dem Trocknungsraum abgeführt, einem Sprühkondensator zugeführt und dort entfeuchtet wird.

Gattungsgemäße Trocknungsanlagen sind im Stand der Technik bekannt und dienen der Reduzierung des Wassergehalts eines feuchten Guts, wie beispielsweise von Klärschlamm, der aus einer Kläranlage stammt. Im Fall von Klärschlamm ist es wichtig, diesen zu trocknen, bevor er einer thermischen Verwertung, d.h. einer Klärschlammverbrennung, zugeführt werden kann.

Bekannt sind in diesem Zusammenhang beispielsweise Kontakttrockner oder Bandtrockner, bei denen der feuchte Klärschlamm auf ein Förderband aufgegeben wird und mit Hilfe des Förderbands langsam durch den Trocknungsraum bewegt wird. Innerhalb des Trocknungsraumes wird dem feuchten Gut Wärme zugeführt, um im Gut vorhandenes Wasser zu verdampfen und damit den Feuchtegehalt des Guts zu reduzieren.

Neben Wasser verdampfen hierbei auch andere im schwefelwasserstoffhaltigen Gut vorhandene flüchtige Komponenten, so dass die im Trocknungsraum entstehende bzw. vorhandene Luft auch schwefelhaltige Verbindungen, insbesondere in Form von Schwefelwasserstoff (H₂S), enthält. Werden nun der Wasserdampf sowie die vom Wasserdampf mitgeführten flüchtigen Komponenten dem Kondensator der Trocknungsanlage zugeführt, so werden im Kondensator nicht nur der Wasserdampf, sondern auch (zumindest teilweise) die zuvor verdampften flüchtigen bzw. mit dem Wasserdampf ausgetragenen Komponenten abgeschieden.

Bei der auch im Rahmen der vorliegenden Erfindung zum Einsatz kommenden Trocknungsanlage werden der Wasserdampf sowie die flüchtigen Komponenten des zu trocknenden Guts innerhalb des Trocknungsraums mit Hilfe eines erwärmten Luftstromes aufgenommen und aus dem Trocknungsraum abgeführt.

Die entsprechend mit Wasserdampf und sonstigen verdampften flüchtigen Komponenten (insbesondere Schwefelwasserstoff) angereicherte Luft wird nach Verlassen des Trocknungsraums mittels des genannten Kondensators wieder von der aufgenommenen Feuchtigkeit befreit und erneut dem Trocknungsraum zugeführt. Die zum Trocknen des feuchten Guts zum Einsatz kommende Luft wird somit, vorzugsweise auch im Rahmen der vorliegenden Erfindung, nahezu vollständig im Kreislauf geführt.

Durch Oxidation des von der feuchten Luft mitgeführten Schwefelwasserstoffs kommt es innerhalb des Behandlungsraums des Kondensators zur Bildung von elementarem Schwefel (2H₂S + O₂ → 2H₂O + 2S). Dieser setzt sich innerhalb des Kondensators ab und führt im Stand der Technik zu Ausfallzeiten für die Reinigung des Kondensators, der hierfür abgeschaltet werden muss und für einen gewissen Reinigungszeitraum nicht betrieben werden kann. In diesem Zeitraum ist auch ein Stillstand der Trocknungsanlage die Folge.

Aufgabe der vorliegenden Erfindung ist es, einen Sprühkondensator, eine wie oben beschriebene Trocknungsanlage sowie ein entsprechendes Verfahren zum Trocknen von feuchtem Gut in verbesserter Form vorzuschlagen.

Die Aufgabe wird gelöst durch einen Sprühkondensator, eine Trocknungsanlage sowie ein Verfahren mit den Merkmalen der unabhängigen Patentansprüche.

Erfindungsgemäß zeichnet sich der zum Einsatz kommende Sprühkondensator dadurch aus, dass er eine Austragsanordnung aufweist, mit deren Hilfe elementarer Schwefel, der sich beim Betrieb des Sprühkondensators innerhalb des Behandlungsraums durch Oxidation des von der feuchten Luft mitgeführten Schwefelwasserstoffs bildet, aus dem Sprühkondensator austragbar ist. Im Gegensatz zum Stand der Technik verfügt der Kondensator also über eine Einrichtung in Form der Austragsanordnung, mit deren Hilfe der zwangsläufig anfallende Schwefel auch während des Betriebs des Sprühkondensators aus diesem ausgetragen werden kann. Der Sprühkondensator muss somit nicht außer Betrieb genommen werden, um die im Stand der Technik bekannte Reinigung durchzuführen. Vielmehr kann die Austragsvorrichtung ausgebildet sein, den Schwefel kontinuierlich oder auch batchweise aus dem Sprühkondensator auszutragen.

Es ist also eine Einrichtung vorhanden, die mit Hilfe einer Steuerung des Sprühkondensators oder der mit dem Sprühkondensator ausgerüsteten Trocknungsanlage aktiviert und wieder deaktiviert werden kann, wobei während des aktivierten Zustands Schwefel aus dem Sprühkondensator mit Hilfe mechanischer Mittel oder der nachfolgend ebenfalls näher beschriebenen Fluiddüsen aus dem Sprühkondensator entfernt wird. Der entfernte Schwefel kann beispielsweise einer weiteren Verwendung in der chemischen Industrie zugeführt werden. Neben verringerten Ausfallzeiten des Sprühkondensators fällt somit ein Produkt an, welches gewinnbringend weiterverarbeitet werden kann.

Alternativ oder zusätzlich zu den bereits genannten Fluiddüsen kann die Austragsvorrichtung eine oder mehrere der nachfolgend beschriebenen Förderschnecken umfassen. Denkbar sind jedoch auch andere mechanische Fördereinrichtungen, wie beispielsweise ein oder mehrere Förderbänder oder z.B. mit Hilfe von umlaufenden Zugmitteln bewegbare Schaber oder Kratzelemente, die den sich in einem Bodenbereich des Behandlungsraums ansammelnden Schwefel aus dem Sprühkondensator austragen oder zu einer Sammelstelle bewegen.

Der Sprühkondensator besitzt ferner einen Schwefelauslass, der beispielsweise als Öffnung eines Rohres ausgebildet sein kann, über den der Schwefel aus dem Sprühkondensator ausgetragen wird.

Ferner bringt es Vorteile mit sich, wenn der Sprühkondensator einen Bodenbereich aufweist, in dem sich der Schwefel beim Betrieb des Sprühkondensators sammelt. Prinzipiell umfasst der Sprühkondensator einen inneren Hohlraum, der den Behandlungsraum bildet, wobei der Behandlungsraum mit Hilfe mehrerer Wände nach außen hin abgegrenzt ist. Eine der Wände ist im unteren Bereich angeordnet und bildet den genannten Bodenbereich. Bildet sich nun während der Kondensation der feuchten Luft und der damit verbundenen Oxidation des in der feuchten Luft mitgeführten Schwefelwasserstoffs elementarer Schwefel innerhalb des Behandlungsraums, so wird dieser entweder schwerkraftbedingt bzw. durch das aus der Luft ausgeschiedene und durch das gekühlte Sprühwasser nach unten fließende Wasserdampfkondensat in den Bodenbereich bewegt. Von dort kann er schließlich ausgetragen werden.

Vorteile bringt es zudem mit sich, wenn die Austragsanordnung eine erste Fördereinrichtung umfasst, mit deren Hilfe der Schwefel sowie eventuell über die feuchte Luft in den Sprühkondensator eingebrachter Staub (der ebenfalls aus der Luft ausgewaschen wird) vom Bodenbereich zu einer Sammelstelle für den Schwefel förderbar ist. Die erste Fördereinrichtung dient damit dem Zweck, den sich im Bodenbereich ansammelnden Schwefel zur Sammelstelle zu bewegen, um diesen von der Sammelstelle aus dem Sprühkondensator austragen zu können. Die erste Fördereinrichtung erstreckt sich damit vorzugsweise über zumindest den größten Teil des Bodenbereichs.

Insbesondere ist es auch denkbar, dass der Bodenbereich als horizontal verlaufende oder um wenige Grad zur Horizontalen geneigte Fläche ausgebildet ist. Ebenso ist es möglich, dass der Bodenbereich als trichterförmige Rinne ausgebildet ist, wobei sich die erste Fördereinrichtung im unteren Bereich der Rinne befindet, da sich dort schwerkraftbedingt der Schwefel ansammeln wird.

Besonders vorteilhaft ist es, wenn die Austragsanordnung eine zweite Fördereinrichtung umfasst, mit deren Hilfe der Schwefel von der Sammelstelle zu einem Schwefelauslass des Sprühkondensators förderbar ist. Während also die erste Fördereinrichtung ausgebildet ist, den über den Bodenbereich verteilten Schwefel während des Betriebs des Sprühkondensators räumlich im Bereich der Sammelstelle zu konzentrieren, dient die zweite Fördereinrichtung dazu, den Schwefel anschließend von der Sammelstelle nach außerhalb des Sprühkondensators oder in den Bereich einer weiteren Fördereinrichtung zu bewegen, welche den Schwefel von dem Sprühkondensator zu einer weiteren Einrichtung, beispielsweise einen Sammelplatz für den Schwefel oder eine den Schwefel weiterverarbeitende Anlage, transportiert.

Auch ist es von Vorteil, wenn die erste Fördereinrichtung und/oder die zweite Fördereinrichtung jeweils eine Förderschnecke umfassen, die jeweils mit Hilfe eines Antriebs um eine Drehachse drehbar sind. Die entsprechende Fördereinrichtung bewegt den Schwefel in diesem Fall auf mechanische Art und Weise. Der Antrieb der jeweiligen Förderschnecke steht vorzugsweise mit einer Steuerung des Sprühkondensators oder der mit dem Sprühkondensator ausgerüsteten Trocknungsanlage in Verbindung, so dass der entsprechende Antrieb zeitbasiert oder beispielsweise basierend auf einem oder mehreren Messwerten aktiviert und wieder deaktiviert werden kann. Als Messwert kann hierbei beispielsweise die Höhe des sich im Bodenbereich ansammelnden Schwefels herangezogen werden, wobei in diesem Fall ein entsprechender Sensor vorhanden sein sollte. Falls zwei Förderschnecken zum Einsatz kommen, können diese mit einem gemeinsamen oder mit separaten Antrieben verbunden sein.

Vorzugsweise ist die Drehachse der zweiten Förderschnecke in einem größeren Winkel gegenüber der Horizontalen geneigt als die Drehachse der ersten Förderschnecke. Insbesondere ist es von Vorteil, wenn die Drehachse der ersten Förderschnecke im Bodenbereich des Sprühkondensators in horizontaler Richtung ausgerichtet ist.

Kommen zwei Förderschnecken zum Einsatz, so ist es von Vorteil, wenn die Drehachsen der Förderschnecken in unterschiedliche Richtungen, vorzugsweise windschief und/oder senkrecht zueinander, verlaufen. Vorzugsweise erstreckt sich die Drehachse der ersten Förderschnecke in einer vorgegebenen Strömungsrichtung der Luft zwischen dem Lufteinlass und dem Luftauslass. Hierdurch kann der gesamte Bodenbereich von der Förderschnecke erreicht und der Schwefel entsprechend zuverlässig in Richtung der Sammelstelle bewegt werden. Die zweite Förderschnecke sollte hingegen ausgehend von der Sammelstelle in einem Winkel zwischen 10° und 60° gegenüber der Horizontalen nach oben geneigt sein. Der Grund hierfür ist die Tatsache, dass sich im Bereich der Sammelstelle nicht nur Schwefel, sondern auch aus der Luft kondensierter Wasserdampf sowie Sprühflüssigkeit sammeln, die ebenfalls von der zweiten Förderschnecke erfasst werden. Durch die nach oben geneigte Ausrichtung wird sichergestellt, dass die entsprechende Flüssigkeit, falls sie von der Förderschnecke erfasst wird, schwerkraftbedingt wieder nach unten fließt und anderweitig von der Sammelstelle abgeführt werden kann. Hierfür ist vorzugsweise der unten beschriebene Überlauf vorhanden.

Auch ist es von Vorteil, wenn die erste Fördereinrichtung Fluiddüsen umfasst, über die beim Betrieb des Sprühkondensators ein Fluid in Form einer Spritzflüssigkeit oder eines Gases eindüsbar ist, wobei mit Hilfe des Fluids der Schwefel in Richtung der Sammelstelle bewegbar ist. Der Schwefel wird in diesem Fall nicht durch die oben genannte Förderschnecke bewegt. Vielmehr wird die kinetische Energie des eingedüsten Fluids auf die Schwefelkristalle übertragen, die hierdurch in Richtung der Sammelstelle bewegt werden. Als Fluid kann beispielsweise Wasser oder auch Luft zum Einsatz kommen. Ferner ist es sowohl denkbar, dass Fluid kontinuierlich als auch stoßweise einzudüsen.

Vorteilhaft ist es also, wenn die Fluiddüsen im Bodenbereich angeordnet sind, wobei die Richtung, in der das Fluid eingedüst wird, im Wesentlichen zur Sammelstelle gerichtet sein sollte.

Bei der Sammelstelle handelt es sich vorzugsweise um eine Vertiefung des Bodenbereichs, in die wiederum die zweite Fördereinrichtung mündet.

Ferner ist es denkbar, dass der Sprühkondensator einen ersten Wärmetauscher aufweist, wobei der Wärmetauscher im Bereich des Lufteinlasses platziert ist oder diesen bildet. Der Wärmetauscher wird von einem Wärmetauschermedium durchströmt und bewirkt eine Vorkühlung der in den Sprühkondensator einströmenden Luft, bevor diese in den Behandlungsraum gelangt.

Vorzugsweise sind im Bereich des genannten Wärmetauschers Flüssigkeitsdüsen angeordnet, mit deren Hilfe Schwefelrückstände von der Oberfläche des Wärmetauschers entfernt werden können, die sich aus der feuchten Luft ablagern. Die Flüssigkeitsdüsen können beweglich ausgebildet sein. Beispielsweise könnten mehrere Flüssigkeitsdüsen zu einer Sprühleiste zusammengefasst sein, die, vorzugsweise mit Hilfe eines Antriebs, hin- und herbewegt werden können.

Ferner kann ein zweiter Wärmetauscher vorhanden sein, der im Bereich des Luftauslasses des Sprühkondensators angeordnet ist oder diesen bildet. Durch den zweiten Wärmetauscher kann die im Behandlungsraum abgekühlte und entfeuchtete Luft vor bzw. beim Verlassen des Sprühkondensators wieder erwärmt werden. Dies ist von Vorteil, da die Luft nach ihrer Entfeuchtung in einer mit dem Sprühkondensator ausgerüsteten Trocknungsanlage vorzugsweise wieder in den Trocknungsraum der Trocknungsanlage eingebracht wird. Umso höher die Temperatur der Luft ist, desto höher ist schließlich auch ihr Wasseraufnahmevermögen im Trocknungsraum.

Ist neben dem ersten Wärmetauscher auch ein zweiter Wärmetauscher Teil des Sprühkondensators, so ist es von Vorteil, wenn beide Wärmetauscher über entsprechende Flüssigkeitsleitungen miteinander gekoppelt sind, so dass die Wärme, die der Luft im Bereich des ersten Wärmetauschers entzogen wird, im Bereich des zweiten Wärmetauschers wieder auf die dann entfeuchtete Luft rückübertragen werden kann. Vorzugsweise ist in zumindest eine der Flüssigkeitsleitungen eine Umwälzpumpe integriert.

Ebenso ist es vorteilhaft, wenn der Sprühkondensator ein mit einer Füllkörperschüttung befülltes Behältnis aufweist, welches in vertikaler Richtung zwischen dem Bodenbereich und zumindest einem Teil der Sprühdüsen angeordnet ist. Das Behältnis weist eine Wandung auf, die aus mehreren Wandungsabschnitten bestehen kann. Zumindest der obere, den Sprühdüsen zugewandte Wandungsabschnitt und der untere Wandungsabschnitt, der dem Bodenbereich des Sprühkondensators benachbart angeordnet ist, sind flüssigkeitsdurchlässig.

Wird nun Spülflüssigkeit über die Sprühdüsen eingesprüht, so gelangt diese Sprühflüssigkeit (vorzugsweise Wasser) in den Behandlungsraum und bewirkt dort eine Kondensation des von der Luft mitgeführten Wasserdampfs. Die Sprühflüssigkeit sowie der kondensierte Wasserdampf können schließlich durch den unteren Wandungsabschnitt in den Bodenbereich übertreten, wobei hierbei auch der elementare Schwefel mitgeführt wird, der sich innerhalb des Behandlungsraums aus dem von der feuchten Luft mitgeführten Schwefelwasserstoff gebildet hat. Schließlich sollten auch die dem Lufteinlass und dem Luftauslass zugewandten Wandungsabschnitte gas- und flüssigkeitsdurchlässig sein, so dass die über den Lufteinlass einströmenden Luft in den Behandlungsraum eintreten und von dort über den Luftauslass wieder aus dem Sprühkondensator austreten kann.

Insbesondere ist es von Vorteil, wenn das Behältnis durch einen Gitterkorb, vorzugsweise aus Edelstahl, gebildet ist.

Ferner ist es von Vorteil, wenn das Behältnis mit Hilfe eines oder mehrerer Abstandshalter in einem vertikalen Abstand zum Bodenbereich gehalten ist, so dass in den Bodenbereich gelangender Schwefel mit Hilfe der ersten Fördereinrichtung unterhalb des Behältnisses in Richtung der Sammelstelle förderbar ist. Bei den Abstandshaltern kann es sich beispielsweise um Metallstege handeln, die sich am Bodenbereich abstützen bzw. in diesem Bereich mit einer Tragstruktur des Sprühkondensators verbunden sind und gleichzeitig das Behältnis von unten her abstützen bzw. im Abstand zum Bodenbereich fixieren. Die Abstandshalter sollten dabei derart ausgebildet sein, dass sich die im Bodenbereich sammelnde Flüssigkeit, die auch den Schwefel mit sich führt, entlang des Bodenbereichs zur Sammelstelle fließen kann. Die Abstandshalter können hierfür entsprechende Durchbrechungen aufweisen.

Insbesondere ist es vorteilhaft, wenn zwischen dem Behältnis und dem Bodenbereich bzw. im Bodenbereich ein Förderkanal für den Schwefel sowie für aus der feuchten Luft auskondensierte Flüssigkeit ausgebildet ist, der durch die genannten Durchbrechungen der Abstandshalter verlaufen kann. Der Förderkanal erstreckt sich vorzugsweise in der Strömungsrichtung der Luft innerhalb des Behandlungsraums, d.h. im Wesentlichen vom Lufteinlass in Richtung des Luftauslasses. Schließlich sollte der Förderkanal in die Sammelstelle münden, über die der Schwefel schließlich mit Hilfe der zweiten Fördereinrichtung aus dem Sprühkondensator ausgetragen wird.

Besonders vorteilhaft ist es, wenn die Sammelstelle einen in ein Sammelbecken mündenden Überlauf für Flüssigkeit aufweist, die beim Betrieb des Sprühkondensators aus der feuchten Luft auskondensiert und sich im Bereich der Sammelstelle sammelt. Hierdurch wird es möglich, dass die Flüssigkeit von der Sammelstelle in das Sammelbecken strömen kann. Hingegen sinkt der Schwefel innerhalb der Sammelstelle nach unten und kann von der zweiten Fördereinrichtung erfasst werden.

Der Sprühkondensator sollte ferner eine Flüssigkeitsleitung aufweisen, welches sich von dem Sammelbecken in Richtung der Sprühdüsen erstreckt. Hierdurch kann die Flüssigkeit innerhalb des Sprühkondensators mit Hilfe einer Umwälzpumpe im Kreislauf gepumpt werden. Vorzugsweise verläuft die Flüssigkeitsleitung durch einen Wärmetauscher, der wiederum mit einem Kühlkreislauf verbunden ist. Hierdurch kann die vom Sammelbecken kommende Flüssigkeit abgekühlt werden, bevor sie erneut über die Sprühdüsen in den Behandlungsraum eingesprüht wird.

Ferner betrifft die vorliegende Erfindung eine Trocknungsanlage zum Trocknen eines schwefelwasserstoffhaltigen feuchten Guts, insbesondere Klärschlamm, wobei die Trocknungsanlage einen Trocknungsraum mit einem Einlass für das feuchte Gut und einem Auslass für das in dem Trocknungsraum getrocknete Gut umfasst. Die Trocknungsanlage umfasst ferner einen Sprühkondensator gemäß bisheriger bzw. nachfolgender Beschreibung, der über eine oder mehrere Luftleitungen (zum Beispiel in Form eines Kanals) mit dem Trocknungsraum in Verbindung steht, über die beim Betrieb der Trocknungsanlage im Trocknungsraum entstehende feuchte, schwefelwasserstoffhaltige, Luft aus dem Trocknungsraum abführbar und dem Sprühkondensator zur Entfeuchtung zuführbar ist.

Die Trocknungsanlage kann beispielsweise einen aus dem Stand der Technik bekannten Bandtrockner mit einem oder mehreren Förderbändern umfassen, mit dessen Hilfe das zu getrocknete Gut durch den Trocknungsraum bewegt wird.

Ferner sollte der Sprühkondensator über eine weitere Luftleitung mit dem Trocknungsraum in Verbindung stehen, so dass die im Kondensator entfeuchtete Luft erneut in den Trocknungsraum eingeleitet werden kann, um dort Feuchte vom zu trocknenden Gut aufzunehmen. Die Luft wird also vorzugsweise zwischen dem Sprühkondensator und dem Trocknungsraum im Kreislauf geführt, wobei sie im Trocknungsraum Feuchte aufnimmt, die sie anschließend im Sprühkondensator wieder abgibt.

Schließlich betrifft die vorliegende Erfindung ein Verfahren zum Trocknen von feuchtem Gut, insbesondere Klärschlamm, mit Hilfe einer Trocknungsanlage, wobei die Trocknungsanlage vorzugsweise gemäß bisheriger bzw. nachfolgender Beschreibung ausgebildet ist. Das feuchte Gut wird über einen Einlass in einen Trocknungsraum der Trocknungsanlage eingebracht und nach dem Trocknungsvorgang über einen Auslass aus dem Trocknungsraum abgeführt.

Beim Betrieb der Trocknungsanlage im Trocknungsraum entstehende feuchte, schwefelwasserstoffhaltige Luft wird aus dem Trocknungsraum abgeführt, einem gemäß bisheriger bzw. nachfolgender Beschreibung ausgebildeten Sprühkondensator zugeführt und dort entfeuchtet.

Wie bereits beschrieben, bildet sich innerhalb des Behandlungsraums des Sprühkondensators während des Betriebs desselben aus dem von der feuchten Luft in den Behandlungsraum eingebrachten Schwefelwasserstoff elementarer Schwefel. Erfindungsgemäß wird nun vorgeschlagen, dass dieser Schwefel, vorzugsweise während des Betriebs des Sprühkondensators, mit Hilfe einer Austragsanordnung aus dem Sprühkondensator ausgetragen wird. Die Entfernung des Schwefels erfolgt also im Gegensatz zum Stand der Technik nicht im Zuge einer manuellen Reinigung des Sprühkondensators, der hierzu zumindest teilweise auseinandergebaut werden müsste. Vielmehr erlaubt die Austragsanordnung das Austragen des sich im Sprühkondensator bildenden Schwefels während oder außerhalb des Betriebs des Sprühkondensators, ohne dass hierfür Bestandteile des Sprühkondensators entfernt werden müssten.

Vorzugsweise erfolgt das Austragen des Schwefels während des Betriebs der Trocknungsanlage, d.h. während mit Hilfe der Trocknungsanlage ein feuchtes Gut getrocknet wird und die hierbei entstehende feuchte Luft innerhalb des Sprühkondensators entfeuchtet wird.

Auch ist es äußert vorteilhaft, wenn der Schwefel während der Entfeuchtung der Luft ausgetragen wird, wobei das Austragen kontinuierlich oder batchweise erfolgt.

Ebenso ist es vorteilhaft, wenn der Schwefel mit Hilfe einer oder mehreren Förderschnecken und/oder einer oder mehrerer Fluiddüsen innerhalb des Sprühkondensators und aus diesem heraus befördert wird. Hinsichtlich der möglichen Merkmale der Förderschnecken bzw. der Fluiddüsen wird auf die obige bzw. nachfolgender Beschreibung verwiesen.

Weitere Vorteile der Erfindung sind in den nachfolgenden Ausführungsbeispielen beschrieben. Es zeigen, jeweils schematisch:
- **Figur 1**: ausgewählte Abschnitte einer erfindungsgemäßen Trocknungsanlage
- **Figur 2**: ausgewählte Abschnitte eines erfindungsgemäßen Sprühkondensators in einer teilweise geschnittenen Seitenansicht,
- **Figur 3**: ausgewählte Abschnitte einer weiteren Ausführungsform eines erfindungsgemäßen Sprühkondensators in einer teilweise geschnittenen Seitenansicht, und
- **Figur 4**: ausgewählte Abschnitte des Sprühkondensators aus Figur 3 in einer teilweise geschnittenen Frontansicht.

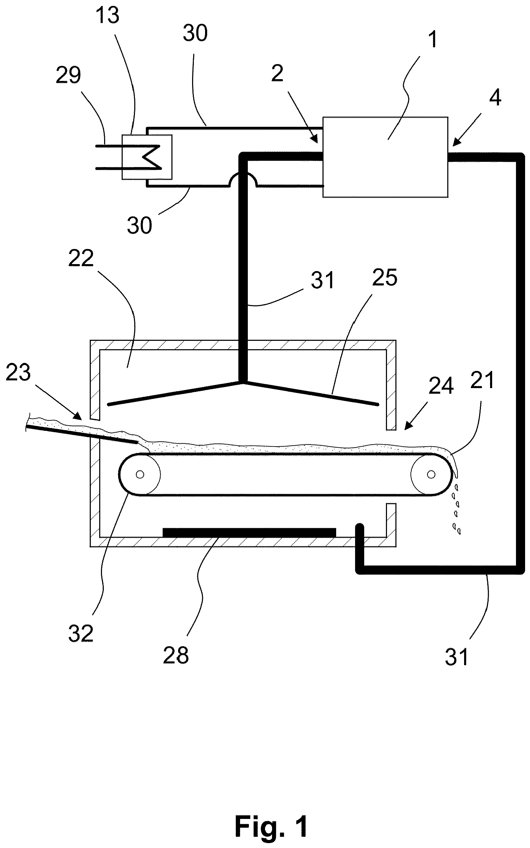

Figur 1 zeigt ausgewählte Komponenten einer Trocknungsanlage gemäß der vorliegenden Erfindung.

Die Trocknungsanlage umfasst generell einen Trocknungsraum 22, der vorzugsweise nach außen hin abgeschlossen ist. Der Trocknungsraum 22 umfasst einen Einlass 23, über den ein zu trocknendes Gut, insbesondere Klärschlamm 21, in den Trocknungsraum 22 eingebracht werden kann. Ebenso ist ein Auslass 24 vorhanden, über den das getrocknete Gut wieder aus dem Trocknungsraum 22 entfernt werden kann.

Innerhalb des Trocknungsraums 22 ist eine Trocknungsfläche vorhanden, die beispielsweise durch das gezeigte Förderband 32, das mit einer nicht gezeigten Antriebseinheit in Verbindung steht, gebildet sein kann. Ebenso ist die Ausführung mit mehreren Förderbändern 32 denkbar, die insbesondere übereinander angeordnet sein können.

Um das feuchte Gut zu trocknen, weist die Trocknungsanlage eine Wärmequelle 28 auf, die beispielsweise als elektrische Heizung oder als Wärmetauscheranordnung ausgebildet sein kann, über die dem Gut Wärme aus einer externen Quelle zugeführt werden kann.

Des Weiteren verfügt die Trocknungsanlage über einen Luftabzug 25 für den Abzug der während des Trocknungsprozesses entstehenden feuchten Luft aus dem Trocknungsraum 22. Der Luftabzug 25 kann beispielsweise als Absaughaube ausgebildet sein, über welche die feuchte Luft mit Hilfe eines nicht gezeigten Ventilators aus dem Trocknungsraum 22 abgezogen werden kann.

Während des Trocknungsvorgangs wird innerhalb des Trocknungsraums 22 nicht nur vom feuchten Gut mitgeführtes Wasser verdampft. Vielmehr gehen auch weitere flüchtige Komponenten, die aus dem feuchten Gut stammen, in die Gasphase über bzw. werden von dem Wasserdampf mitgerissen.

Hierzu zählt beispielsweise Schwefelwasserstoff. In der Vergangenheit hat sich gezeigt, dass es durch Oxidation zu einem Ausfallen von elementarem Schwefel innerhalb der Trocknungsanlage, insbesondere in dem nachfolgend noch näher beschriebenen Sprühkondensator 1, kommen kann, wobei dies zu signifikanten Beeinträchtigungen des Betriebsablaufs führt.

Es ist daher im Stand der Technik bekannt, den Sprühkondensator 1 in regelmäßigen Zeiträumen einem Reinigungsvorgang zu unterziehen, wobei für die Reinigung der Sprühkondensator 1 zumindest teilweise auseinandergebaut werden muss. Hierdurch entstehen nicht unerhebliche Kosten, insbesondere da die Trocknungsanlage während der Reinigung nicht betrieben werden kann.

Um hier Abhilfe zu schaffen, wird nun erfindungsgemäß vorgeschlagen, dass der innerhalb des Sprühkondensators 1 entstehende elementare Schwefel mit Hilfe einer Austragsanordnung aus dem Sprühkondensator 1 ausgetragen, d.h. entfernt wird. Dies kann während des Betriebs der Trocknungsanlage bzw. des Sprühkondensators 1 oder auch während eines Zeitraums erfolgen, in dem die Trocknungsanlage bzw. der Sprühkondensator 1 nicht betrieben werden.

In jedem Fall ist die Austragsanordnung ausgebildet, den Schwefel aus dem Sprühkondensator 1 zu entfernen, ohne dass dieser hierfür zerlegt oder geöffnet werden muss.

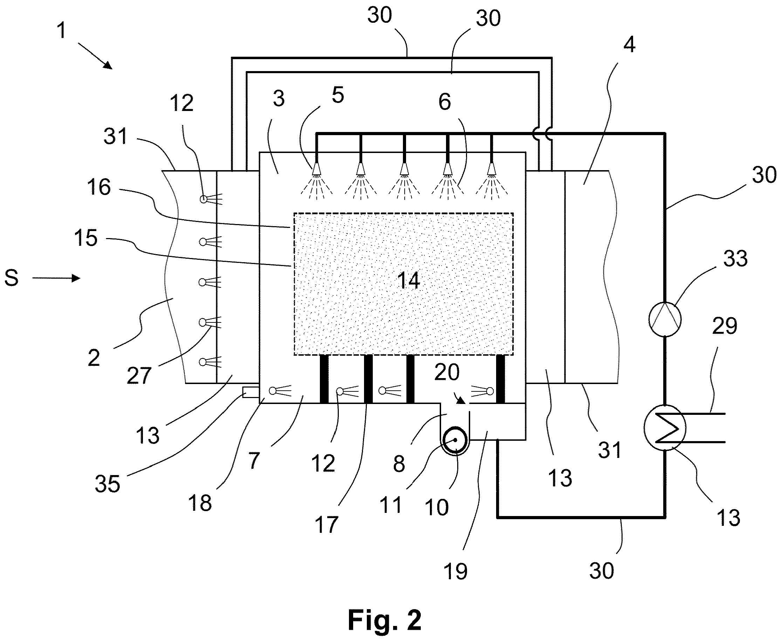

Eine erste Ausführungsform eines erfindungsgemäßen Sprühkondensators 1 in einer teilweise geschnittenen Seitenansicht ist in Figur 2 gezeigt.

Wie diese Figur zu entnehmen ist, umfasst der Sprühkondensator 1 einen Lufteinlass 2, der beispielsweise durch den Endabschnitt einer in Figur 1 gezeigten Luftleitung 31 gebildet sein kann. Der Lufteinlass 2 mündet in einen inneren Behandlungsraum 3, in dem die vom Trocknungsraum 22 kommende feuchte Luft mit einer gekühlten Flüssigkeit 6, vorzugsweise Wasser, in Kontakt gebracht wird, welche über mehrere Sprühdüsen 5 in den Behandlungsraum 3 eingesprüht wird. Nach Passieren des Behandlungsraums 3 verlässt die innerhalb des Behandlungsraums 3 entfeuchtete Luft den Sprühkondensator 1 schließlich über einen Luftauslass 4, der wiederum durch einen Endabschnitt der Luftleitung 31 gebildet sein kann, die die entfeuchtete Luft wieder in den Trocknungsraum 22 zurückleitet.

Die Entfeuchtung der feuchten Luft innerhalb des Behandlungsraums 3 erfolgt durch Abkühlung der feuchten Luft, wobei dies durch Kontakt mit der genannten eingesprühten Flüssigkeit 6 erfolgt. Die Flüssigkeit 6 wird vorzugsweise über eine Flüssigkeitsleitung 30 und mit Hilfe einer Umwälzpumpe 33 im Kreislauf geführt und über einen Kühlkreislauf 29 und einem hiermit in Wirkverbindung stehenden Wärmetauscher 13 gekühlt.

Innerhalb des Behandlungsraums 3 ist ferner ein Behältnis 15, vorzugsweise in Form eines Gitterkorbs mit mehreren Wandungen 16, vorgesehen, welches über Abstandshalter 17 auf einem Bodenbereich 7 des Sprühkondensators 1 abgestützt ist. Innerhalb des Behältnisses 15 ist vorzugsweise eine Füllkörperschüttung 14, beispielsweise aus Glaskugeln, vorhanden, die eine große Oberfläche und damit eine große Kontaktfläche zwischen feuchter Luft und eingesprühter Flüssigkeit 6 bereitstellt.

Wird nun feuchte und schwefelwasserstoffhaltige Luft in der gezeigten Strömungsrichtung S in den Behandlungsraum 3 eingebracht und mit gekühlter Flüssigkeit 6 in Kontakt gebracht, so kommt es neben dem Kondensieren von Wasserdampf auch zu einem Ausfallen von elementarem Schwefel. Dieser wird durch die nach unten strömende Flüssigkeit 6 bzw. den nach unten strömenden kondensierten Wasserdampf in den Bodenbereich 7 bewegt und sammelt sich dort.

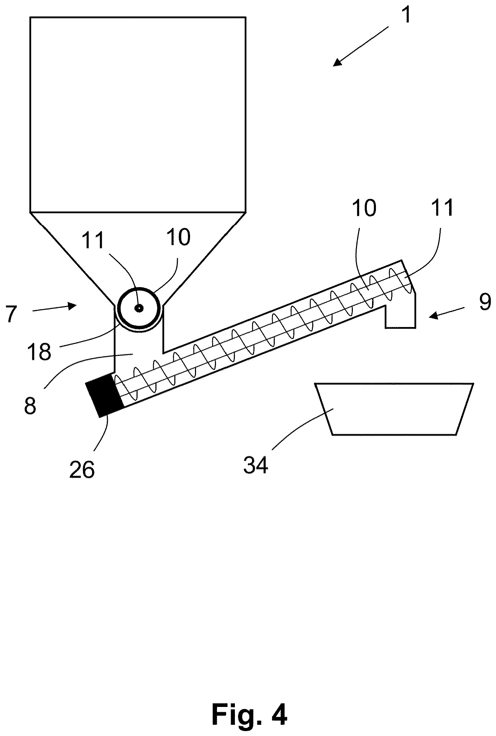

Um den Schwefel vom Bodenbereich 7 aus dem Sprühkondensator 1 austragen zu können, sind vorzugsweise mehrere Fluiddüsen 12 im Bodenbereich 7 angeordnet, über die ein Fluid (beispielsweise Spritzflüssigkeit 27 in Form von Wasser oder ein Gas) eingedüst werden kann. Durch die vom Fluid auf den Schwefel im Bereich des zwischen dem Behältnis 15 und dem Bodenbereich 7 ausgebildeten Förderkanal 18 übertragene kinetische Energie wird der Schwefel schließlich in den Bereich einer Sammelstelle 8 bewegt. Dort ist vorzugsweise eine um eine Drehachse 11 drehbare Förderschnecke 10 angeordnet, die über einen nicht gezeigten Antrieb in eine Drehbewegung versetzt werden kann. Hierdurch wird der Schwefel schließlich von der Sammelstelle 8 weg transportiert und kann den Sprühkondensator 1 schließlich über einen Schwefelauslass 9 (vergleiche Figur 4) verlassen.

Im Übrigen sei an dieser Stelle darauf hingewiesen, dass in den Figuren aus Übersichtsgründen immer nur eines von mehreren gleichartigen Bauteilen mit einem Bezugszeichen versehen ist. Dies gilt insbesondere für die Fluiddüsen 12 und die Sprühdüsen 5. Mit anderen Worten: bei gleichartig gezeichneten Bauteilen handelt es sich um dieselben Bauteile.

Des Weiteren zeigt Figur 2, dass im Bereich des Lufteinlasses 2 ein Wärmetauscher 13 vorhanden sein kann. Gleiches gilt auch für den Luftauslass 4. Strömt nun die warme feuchte Luft über den ersten Wärmetauscher 13 in den Behandlungsraum 3, so wird sie vorgekühlt, indem sie Wärme auf das durch den ersten Wärmetauscher 13 strömende Wärmeträgermedium überträgt. Nach Passieren des Behandlungsraums 3, in dem eine Abkühlung der Luft erfolgt, wird sie im Bereich des Luftauslasses 4 durch den zweiten Wärmetauscher 13 wieder erwärmt, so dass sie möglichst viel Feuchtigkeit aufnehmen kann, wenn sie erneut den Trocknungsraum 22 erreicht.

Der erste und der zweite Wärmetauscher 13 sind vorzugsweise über entsprechende Flüssigkeitsleitungen 30 verbunden, über die das Wärmeträgermedium, vorzugsweise unterstützt durch eine nicht gezeigte Pumpe, zwischen dem ersten Wärmetauscher 13 und dem zweiten Wärmetauscher 13 im Kreislauf zirkuliert.

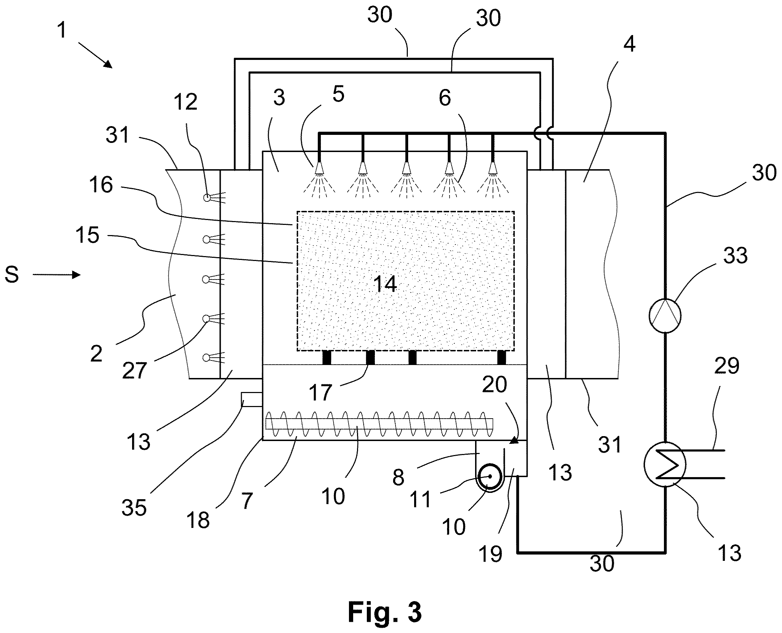

Ferner ist es von Vorteil, wenn, wie in den Figuren 2 und 3 gezeigt, weitere Flüssigkeitsdüsen 12 im Bereich des ersten Wärmetauschers 13 vorhanden sind, mit deren Hilfe Schwefelablagerungen vom Wärmetauscher 13 entfernt werden können, die dann ebenfalls zur Sammelstelle 8 bewegt werden.

Schließlich ist Figur 2 zu entnehmen, dass im Bereich der Sammelstelle 8, in die der Schwefel mit Hilfe der im Bodenbereich 7 angeordneten Fluiddüsen 12 bewegt wird, ein Überlauf 20 vorhanden ist. Über den Überlauf 20 kann Flüssigkeit 6 (von oben über die Sprühdüsen 5 eingebrachte Flüssigkeit 6, kondensierter Wasserdampf) von der Sammelstelle 8 in ein Sammelbecken 19 übertreten. Von dort wird sie schließlich mit Hilfe einer Umwälzpumpe 33 und über eine entsprechende Flüssigkeitsleitung 30 abgezogen und nach entsprechender Abkühlung erneut über die Sprühdüsen 5 in den Behandlungsraum 3 eingebracht.

Ebenso ist ein Überlaufauslass 35 vorhanden, über den Flüssigkeit 6 aus dem Sprühkondensator 1, beispielsweise über eine nicht gezeigte Leitung, kontinuierlich oder dann, wenn der Flüssigkeitsstand innerhalb des Sprühkondensators 1 einen bestimmten Betrag überschreitet, abgeführt werden kann (s.a. Figur 3).

Ein weiteres Ausführungsbeispiel eines erfindungsgemäßen Sprühkondensators 1 ist der Zusammenschau der Figuren 3 und 4 zu entnehmen. Wie ein Vergleich der Figuren 2 und 3 zeigt, unterscheiden sich beide Ausführungsformen insbesondere durch die erste Fördereinrichtung im Bodenbereich 7 des Sprühkondensators 1.

Während die erste Fördereinrichtung im Fall von Figur 2 durch mehrere Fluiddüsen 12 gebildet wird, umfasst die zweite Fördereinrichtung im Ausführungsbeispiel der Figuren 3 und 4 eine Förderschnecke 10, die sich in der Strömungsrichtung S der Luft im Bodenbereich 7 erstreckt und mit deren Hilfe Schwefel im Bodenbereich 7 in Richtung der Sammelstelle 8 bewegbar ist.

Auch in diesem Fall umfasst die zweite Fördereinrichtung eine mit Hilfe eines Antriebs 26 drehbare Förderschnecke 10, die, wie in Figur 4 zu sehen, ausgehend von der Sammelstelle 8 zu einem Schwefelauslass 9 verläuft, über den der Schwefel schließlich aus dem Sprühkondensator 1 austritt und beispielsweise in einem Container 34 gesammelt werden kann.

Wie Figur 4 ebenfalls zeigt, ist die Förderschnecke 10 der zweiten Fördereinrichtung gegenüber der Horizontalen schräg nach oben gerichtet, so dass möglichst wenig Flüssigkeit 6 über die Förderschnecke 10 ausgetragen wird. Die Förderschnecke 10 der zweiten Fördereinrichtung kann im Übrigen im Ausführungsbeispiel gemäß Figur 2 vergleichbar ausgebildet und ausgerichtet sein.

Die vorliegende Erfindung ist nicht auf die dargestellten und beschriebenen Ausführungsbeispiele beschränkt. Abwandlungen im Rahmen der Patentansprüche sind ebenso möglich wie eine beliebige Kombination der beschriebenen Merkmale, auch wenn sie in unterschiedlichen Teilen der Beschreibung bzw. den Ansprüchen oder in unterschiedlichen Ausführungsbeispielen dargestellt und beschrieben sind, vorausgesetzt, dass kein Widerspruch zur Lehre der unabhängigen Ansprüche entsteht.

### Bezugszeichenliste

- 1: Sprühkondensator
- 2: Lufteinlass
- 3: Behandlungsraum
- 4: Luftauslass
- 5: Sprühdüse
- 6: Flüssigkeit
- 7: Bodenbereich
- 8: Sammelstelle
- 9: Schwefelauslass
- 10: Förderschnecke
- 11: Drehachse der Förderschnecke
- 12: Fluiddüse
- 13: Wärmetauscher
- 14: Füllkörperschüttung
- 15: Behältnis
- 16: Wandung des Behältnisses
- 17: Abstandshalter
- 18: Förderkanal
- 19: Sammelbecken
- 20: Überlauf
- 21: Klärschlamm
- 22: Trocknungsraum
- 23: Einlass
- 24: Auslass
- 25: Luftabzug
- 26: Antrieb der Förderschnecke
- 27: Spritzflüssigkeit
- 28: Wärmequelle
- 29: Kühlkreislauf
- 30: Flüssigkeitsleitung
- 31: Luftleitung
- 32: Förderband
- 33: Umwälzpumpe
- 34: Container
- 35: Überlaufauslass
- S: Strömungsrichtung der Luft

## Patentansprüche

1. Sprühkondensator (1) zum Entfeuchten von feuchter, schwefelwasserstoffhaltiger Luft, wobei der Sprühkondensator (1) einen Lufteinlass (2) für die feuchte Luft, einen mit dem Lufteinlass (2) strömungstechnisch in Verbindung stehenden Behandlungsraum (3) zum Entfeuchten der feuchten Luft sowie einen Luftauslass (4) für die im Behandlungsraum (3) entfeuchtete Luft aufweist, wobei der Sprühkondensator (1) Sprühdüsen (5) aufweist, über die gekühlte Flüssigkeit (6) in den Behandlungsraum (3) eindüsbar ist, um in der feuchten Luft vorhandenen Wasserdampf abzukühlen und hierdurch zu kondensieren, **dadurch gekennzeichnet, dass** der Sprühkondensator (1) eine Austragsanordnung aufweist, mit deren Hilfe elementarer Schwefel, der sich beim Betrieb des Sprühkondensators (1) innerhalb des Behandlungsraums (3) durch Oxidation des von der feuchten Luft mitgeführten Schwefelwasserstoffs bildet, aus dem Sprühkondensator (1) austragbar ist.

2. Sprühkondensator (1) gemäß dem vorangegangenen Anspruch, **dadurch gekennzeichnet, dass** der Sprühkondensator (1) einen Bodenbereich (7) aufweist, in dem sich der Schwefel beim Betrieb des Sprühkondensators (1) sammelt.

3. Sprühkondensator (1) gemäß einem der vorangegangenen Ansprüche, **dadurch gekennzeichnet, dass** die Austragsanordnung eine erste Fördereinrichtung umfasst, mit deren Hilfe der Schwefel vom Bodenbereich (7) zu einer Sammelstelle (8) für den Schwefel förderbar ist.

4. Sprühkondensator (1) gemäß einem der vorangegangenen Ansprüche, **dadurch gekennzeichnet, dass** die Austragsanordnung eine zweite Fördereinrichtung umfasst, mit deren Hilfe der Schwefel von der Sammelstelle (8) zu einem Schwefelauslass (9) des Sprühkondensators (1) förderbar ist.

5. Sprühkondensator (1) gemäß einem der vorangegangenen Ansprüche, **dadurch gekennzeichnet, dass** die erste Fördereinrichtung und die zweite Fördereinrichtung jeweils eine Förderschnecke (10) umfassen, die jeweils mit Hilfe eines Antriebs (26) um eine Drehachse (11) drehbar sind.

6. Sprühkondensator (1) gemäß einem der vorangegangenen Ansprüche, **dadurch gekennzeichnet, dass** die Drehachsen (11) der Förderschnecken (10) in unterschiedliche Richtungen, vorzugsweise windschief und/oder senkrecht zueinander, verlaufen, wobei sich die Drehachse (11) der ersten Förderschnecke (10) vorzugsweise in einer vorgegebenen Strömungsrichtung (S) der Luft zwischen dem Lufteinlass (2) und dem Luftauslass (4) erstreckt.

7. Sprühkondensator (1) gemäß einem der vorangegangenen Ansprüche, **dadurch gekennzeichnet, dass** die erste Fördereinrichtung Fluiddüsen (12) umfasst, über die beim Betrieb des Sprühkondensators (1) ein Fluid in Form einer Spritzflüssigkeit (27) oder eines Gases eindüsbar ist, wobei mit Hilfe des Fluids der Schwefel in Richtung der Sammelstelle (8) bewegbar ist.

8. Sprühkondensator (1) gemäß einem der vorangegangenen Ansprüche, **dadurch gekennzeichnet, dass** die Fluiddüsen (12) im Bodenbereich (7) und/oder im Bereich eines Wärmetauschers (13) des Sprühkondensators (1) angeordnet sind, wobei der Wärmetauscher (13) im Bereich des Lufteinlasses (2) platziert ist oder diesen bildet und wobei der Wärmetauscher (13) beim Betrieb des Sprühkondensators (1) der Vorkühlung der über den Lufteinlass (2) einströmenden feuchten Luft dient.

9. Sprühkondensator (1) gemäß einem der vorangegangenen Ansprüche, **dadurch gekennzeichnet, dass** der Sprühkondensator (1) ein mit einer Füllkörperschüttung (14) befülltes Behältnis (15) aufweist, welches in vertikaler Richtung zwischen dem Bodenbereich (7) und zumindest einem Teil der Sprühdüsen (5) angeordnet ist, wobei das Behältnis (15) eine gas- und flüssigkeitsdurchlässige Wandung (16) aufweist und im Betrieb des Sprühkondensators (1) von der Luft durchströmt wird, wobei das Behältnis (15) mit Hilfe eines oder mehrerer Abstandshalter (17) in einem vertikalen Abstand zum Bodenbereich (7) gehalten ist, so dass in den Bodenbereich (7) gelangender Schwefel mit Hilfe der ersten Fördereinrichtung unterhalb des Behältnisses (15) in Richtung der Sammelstelle (8) förderbar ist.

10. Sprühkondensator (1) gemäß einem der vorangegangenen Ansprüche, **dadurch gekennzeichnet, dass** zwischen dem Behältnis (15) und dem Bodenbereich (7) ein Förderkanal (18) für den Schwefel sowie für aus der feuchten Luft auskondensierte Flüssigkeit (6) ausgebildet ist.

11. Sprühkondensator (1) gemäß einem der vorangegangenen Ansprüche, **dadurch gekennzeichnet, dass** die Sammelstelle (8) einen in ein Sammelbecken (19) mündenden Überlauf (20) für Flüssigkeit (6) aufweist, die beim Betrieb des Sprühkondensators (1) aus der feuchten Luft auskondensiert und sich im Bereich der Sammelstelle (8) sammelt.

12. Trocknungsanlage zum Trocknen eines schwefelwasserstoffhaltigen feuchten Guts, insbesondere Klärschlamm (21), wobei die Trocknungsanlage einen Trocknungsraum (22) mit einem Einlass (23) für das feuchte Gut und einem Auslass (24) für das in dem Trocknungsraum (22) getrocknete Gut umfasst, und wobei die Trocknungsanlage einen Kondensator umfasst, der derart mit dem Trocknungsraum (22) in Verbindung steht, dass beim Betrieb der Trocknungsanlage im Trocknungsraum (22) entstehende feuchte, schwefelwasserstoffhaltige Luft aus dem Trocknungsraum (22) abführbar und dem Kondensator zur Entfeuchtung zuführbar ist,
**dadurch gekennzeichnet,**
**dass** der Kondensator als Sprühkondensator (1) gemäß einem der vorangegangenen Ansprüche ausgebildet ist.

13. Verfahren zum Trocknen von feuchtem Gut, insbesondere Klärschlamm (21), mit Hilfe einer Trocknungsanlage, vorzugsweise mit einer Trocknungsanlage gemäß dem vorangegangenen Anspruch, wobei das feuchte Gut über einen Einlass (23) in einen Trocknungsraum (22) der Trocknungsanlage eingebracht und nach dem Trocknungsvorgang über einen Auslass (24) aus dem Trocknungsraum (22) abgeführt wird, und wobei die beim Betrieb der Trocknungsanlage im Trocknungsraum (22) entstehende feuchte, schwefelwasserstoffhaltige Luft aus dem Trocknungsraum (22) abgeführt, einem Sprühkondensator (1) zugeführt und dort entfeuchtet wird,
**dadurch gekennzeichnet,**
**dass** elementarer Schwefel, der sich beim Betrieb des Sprühkondensators (1) innerhalb des Sprühkondensators (1) durch Oxidation des von der feuchten Luft mitgeführten Schwefelwasserstoffs gebildet wird, mit Hilfe einer Austragsanordnung aus dem Sprühkondensator (1) ausgetragen wird.

14. Verfahren gemäß dem vorangegangenen Anspruch, **dadurch gekennzeichnet, dass** der Schwefel während der Entfeuchtung der Luft ausgetragen wird, wobei das Austragen kontinuierlich oder batchweise erfolgt.

15. Verfahren gemäß Anspruch 13 oder 14, **dadurch gekennzeichnet, dass** der Schwefel mit Hilfe einer oder mehreren Förderschnecken (10) und/oder einer oder mehrerer Fluiddüsen (12) innerhalb des Sprühkondensators (1) und aus diesem heraus befördert wird.
